# EUROPEAN PATENT APPLICATION

(11) **EP 4 647 902 A1**
(43) Date of publication of application: **12.11.2025**
(21) Application number: 24806042.8
(22) Date of filing: 03.01.2024
(51) Int. Cl.: G06F 9/445, H04W 8/24

(54) **DYNAMIC BINDING METHOD AND SYSTEM, ELECTRONIC DEVICE, AND STORAGE MEDIUM**

(30) Priority: 12.05.2023 CN 202310541141
(71) Applicant: Huawei Technologies Co., Ltd., Shenzhen, Guangdong 518129 (CN)
(72) Inventor: XU, Bei, Shenzhen, Guangdong 518129 (CN); LUO, Wei, Shenzhen, Guangdong 518129 (CN); ZHAO, Yongjie, Shenzhen, Guangdong 518129 (CN)
(74) Representative: Goddar, Heinz J.
(86) International application number: PCT/CN2024/070353
(87) International publication number: WO 2024/234678

(57) **Abstract**

Embodiments of this application relate to the field of computer technologies, and in particular, to a dynamic binding method and system, an electronic device, and a storage medium. A first terminal device receives a software development kit SDK resource package sent by a second terminal device, and stores the SDK resource package in a storage, where the SDK resource package is obtained by the second terminal device from a cloud server; and in response to SDK configuration selection, loads an SDK selected through the SDK configuration selection into a memory, and displays, on a home screen, an icon corresponding to the SDK loaded into the memory. Each SDK resource package and a standard application are developed according to a predefined unified standard, to ensure that the standard application is capable of successfully invoking, for binding and use, the SDK loaded into the memory. Different SDKs are dynamically loaded into the memory. One standard application can implement functions of a plurality of applications. In addition, a plurality of SDKs do not occupy excessive space of the memory because of being preset in the memory.

## Description

This application claims priority to Chinese Patent Application No. 202310541141.3, filed with the China National Intellectual Property Administration on May 12, 2023, and entitled "DYNAMIC BINDING METHOD AND SYSTEM, ELECTRONIC DEVICE, AND STORAGE MEDIUM", which is incorporated herein by reference in its entirety.

### TECHNICAL FIELD

Embodiments of this application relate to the field of computer technologies, and in particular, to a dynamic binding method and system, an electronic device, and a storage medium.

### BACKGROUND

Currently, functions of wearable devices (such as a smartwatch and a sports band) gradually increase, and are related to a plurality of fields of life. For example, after being bound to a user, some wearable devices can perform access control identification or quick response code payment, so that life of the user is more convenient.

However, due to software and hardware limitations of the wearable device, the wearable device cannot support installation of a third-party application in an application market. To use an application, a software development kit (Software Development Kit, SDK) of the application needs to be loaded into a memory of the wearable device in advance. The wearable device has a relatively small memory resource and a large quantity of SDKs cannot be preset, thereby limiting a quantity of applications supported by the wearable device. In addition, the preset SDKs always exist in the memory. Even if some applications are not used for a long time, corresponding SDKs also occupy the memory, thereby wasting storage resources.

### SUMMARY

Embodiments of this application provide a dynamic binding method and system, an electronic device, and a storage medium. A wearable device downloads, from a cloud server by using a terminal, for example, a mobile phone, an SDK resource package matching SDK configuration information, loads a selected SDK into a memory based on selection of a user by using a standard application, and invokes the SDK by using the standard application, to complete binding and subsequent normal use. Different SDKs are loaded into the memory based on different SDK configuration information. One standard application can implement functions of a plurality of applications. In addition, a plurality of SDKs do not occupy excessive space of the memory because of being preset in the memory.

According to a first aspect, an embodiment of this application provides a dynamic binding system. The system includes a first terminal device, a second terminal device, and a cloud server. The second terminal device is configured to send software development kit SDK configuration information to the cloud server. The cloud server is configured to: obtain, through screening from a pre-stored SDK resource package, an SDK resource package associated with the SDK configuration information, and send the SDK resource package obtained through screening to the second terminal device. The second terminal device is further configured to send, to the first terminal device, the SDK resource package sent by the cloud server. The first terminal device is configured to: store, in a storage, the SDK resource package sent by the second terminal device, and load, into a memory by using a preset standard application in response to an operation of a user selecting an SDK resource package in the storage, an SDK in the SDK resource package selected by the user. Each SDK resource package and the standard application are developed according to a predefined unified standard, to ensure that the standard application is capable of successfully invoking, for binding and use, the SDK loaded into the memory.

In an embodiment, the second terminal device is specifically configured to send the software development kit SDK configuration information to the cloud server when or after the first terminal device establishes a connection to the second terminal device.

In an embodiment, the second terminal device is specifically configured to: after the first terminal device establishes the connection to the second terminal device, send the software development kit SDK configuration information to the cloud server if the first terminal device establishes the connection to the second terminal device for the first time or current area information of the second terminal changes compared with area information present when the second terminal device establishes a connection to the first terminal device last time. The SDK configuration information includes the area information.

In an embodiment, the first terminal device is further configured to send device information to the second terminal device after establishing the connection to the second terminal device. The SDK configuration information further includes the device information of the first terminal device.

According to a second aspect, an embodiment of this application provides a dynamic binding method, applied to a first terminal device. The method includes: loading, into a memory by using a preset standard application, an SDK in an SDK resource package selected by a user, and displaying, on a home screen by using the preset standard application, an icon corresponding to the SDK loaded into the memory; and when any of the icon on the home screen is selected, invoking, by using the preset standard application, an SDK associated with the selected icon to execute a binding procedure. Each SDK resource package and the standard application are developed according to a predefined unified standard, to ensure that the standard application is capable of successfully invoking, for binding and use, the SDK loaded into the memory.

In an embodiment, before the loading, into a memory by using a preset standard application, an SDK in an SDK resource package selected by a user, the method further includes: displaying an SDK configuration interface, where the SDK configuration interface has an option corresponding to each SDK resource package, and each option has SDK-associated information; and the loading, into a memory by using a preset standard application, an SDK in an SDK resource package selected by a user includes: loading, into the memory by using the preset standard application, an SDK in an SDK resource package corresponding to an option selected by the user on the SDK configuration interface.

In an embodiment, before the displaying an SDK configuration interface, the method further includes: receiving a software development kit SDK resource package sent by a second terminal device, and storing the SDK resource package in a storage; and parsing, by using the preset standard application, each SDK resource package stored in the storage, to obtain an SDK in each SDK resource package and the SDK-associated information.

In an embodiment, the loading, into the memory by using the preset standard application, an SDK in an SDK resource package corresponding to an option selected by the user on the SDK configuration interface includes: loading, into the memory by using the preset standard application, an SDK in each SDK resource package corresponding to one or more options selected by the user on the SDK configuration interface; and the displaying, on a home screen by using the preset standard application, an icon corresponding to the SDK loaded into the memory includes: displaying, on the home screen by using the preset standard application, an icon corresponding to each SDK loaded into the memory.

In an embodiment, the information includes at least one or any combination of: an icon; an SDK name; and storage space occupied by the SDK.

In an embodiment, after the binding procedure is completed, the method further includes: when any of the icon on the home screen is selected, invoking, by using the standard application, an SDK corresponding to the selected icon, to execute a use procedure.

In an embodiment, after the binding procedure is completed, the method further includes: receiving an SDK unbinding request sent by a second terminal device; and unbinding a corresponding SDK based on the SDK unbinding request and deleting the SDK from the memory.

In an embodiment, before the receiving a software development kit SDK sent by a second terminal device and storing the SDK in a storage, the method further includes: if it is detected that the second terminal device is different from a device connected last time, executing an SDK initialization procedure, where the SDK initialization procedure is used to delete an original SDK in the memory and delete an original SDK resource package in the storage.

In an embodiment, the method further includes: in response to an operation of the user unbinding a bound SDK, sending an unbinding instruction to a second terminal device, deleting the corresponding SDK from the memory, and deleting the corresponding icon from the home screen.

According to a third aspect, an embodiment of this application provides a dynamic binding method. The method is applied to a second terminal device, and includes: determining SDK configuration information after establishing a connection to a first terminal device; sending the SDK configuration information to a cloud server, so that the cloud server determines, based on the SDK configuration information, an SDK resource package associated with the first terminal device; receiving the SDK resource package sent by the cloud server; and sending at least part of the SDK resource package to the first terminal device, so that the first terminal device obtains an SDK from the SDK resource package, loads the SDK into a memory, and invokes the SDK by using a preset standard application, to complete a binding procedure.

In an embodiment, the SDK configuration information includes at least device information of the first terminal device and area information; and the determining SDK configuration information includes: obtaining the device information of the first terminal device; and obtaining a current IP address of the second terminal device, and determining the area information based on the IP address.

In an embodiment, the sending at least part of the SDK resource package to the first terminal device includes: sending, to the first terminal device, the at least part of the SDK resource package selected by a user from the received SDK resource package sent by the cloud server.

In an embodiment, the method further includes: when it is detected that an unbinding operation is performed on any SDK that is successfully bound, sending an SDK unbinding request to the first terminal device, so that the first terminal device unbinds an SDK bound to a terminal application and deletes the SDK from the memory.

According to a fourth aspect, an embodiment of this application provides an electronic device, including:
at least one processor; and
at least one storage communicatively connected to the processor, where
the storage stores program instructions, and the processor invokes the program instructions to perform the method according to the first aspect.

According to a fifth aspect, an embodiment of this application provides a computer-readable storage medium, where the computer-readable storage medium includes a stored program, and when the program is executed by a processor, the method according to the first aspect is implemented.

In embodiments of this application, the first terminal device receives the software development kit SDK resource package sent by the second terminal device, and stores the SDK resource package in the storage, where the SDK resource package is obtained by the second terminal device from the cloud server; in response to SDK configuration selection, loads, into the memory, an SDK selected through the SDK configuration selection, and displays, on the home screen, an icon corresponding to the SDK loaded into the memory; and when it is detected that an icon corresponding to any SDK loaded into the memory is selected, invokes, by using the preset standard application, the SDK associated with the selected icon to generate SDK binding information, where the SDK binding information is used to support the second terminal device in executing the binding procedure. Different SDKs are dynamically loaded into the memory. One standard application can implement functions of a plurality of applications. In addition, a plurality of SDKs do not occupy excessive space of the memory because of being preset in the memory.

### BRIEF DESCRIPTION OF DRAWINGS

FIG. 1 is a flowchart of a dynamic binding method according to an embodiment of this application;
FIG. 2A is a diagram of a dynamic binding method according to an embodiment of this application;
FIG. 2B is a diagram of another dynamic binding method according to an embodiment of this application;
FIG. 2C is a diagram of another dynamic binding method according to an embodiment of this application;
FIG. 2D is a diagram of another dynamic binding method according to an embodiment of this application;
FIG. 2E is a diagram of another dynamic binding method according to an embodiment of this application;
FIG. 2F is a diagram of another dynamic binding method according to an embodiment of this application;

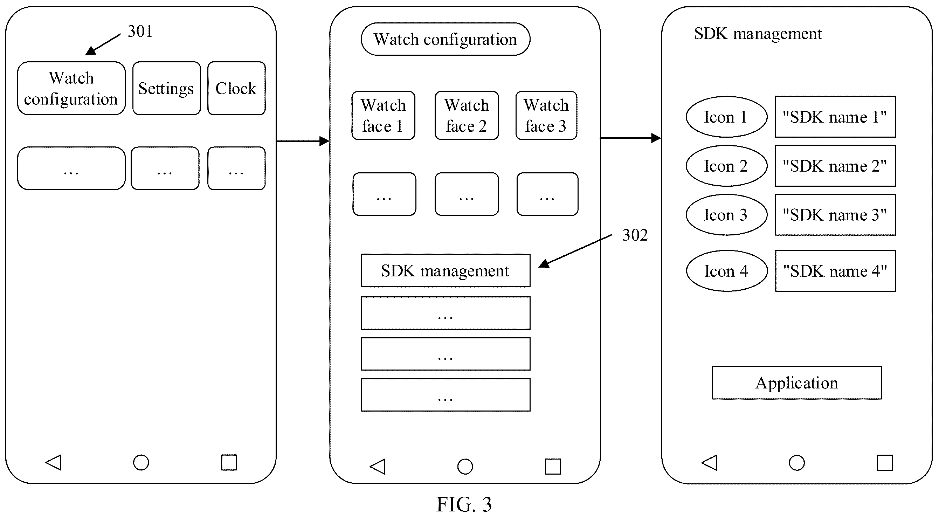

FIG. 3 is a diagram of another dynamic binding method according to an embodiment of this application;
FIG. 4 is a flowchart of another dynamic binding method according to an embodiment of this application;
FIG. 5 is a flowchart of another dynamic binding method according to an embodiment of this application;
FIG. 6 is a diagram of a structure of a dynamic binding apparatus according to an embodiment of this application;
FIG. 7 is a diagram of a structure of another dynamic binding apparatus according to an embodiment of this application; and

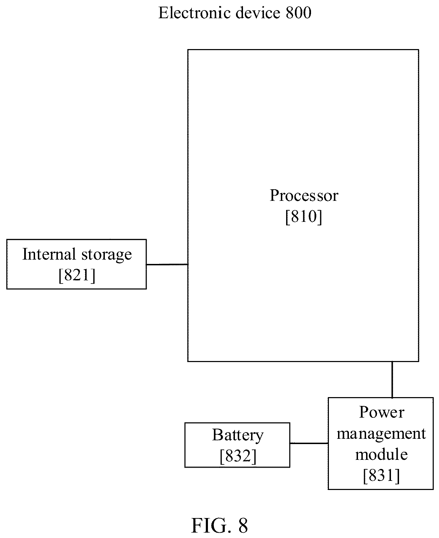

FIG. 8 is a diagram of a structure of an electronic device according to an embodiment of this application.

### DESCRIPTION OF EMBODIMENTS

For better understanding of technical solutions of this specification, the following describes embodiments of this application in detail with reference to accompanying drawings.

It should be noted that the described embodiments are merely some but not all of embodiments of this specification. All other embodiments obtained by a person of ordinary skill in the art based on embodiments of this specification without creative efforts shall fall within the protection scope of this specification.

Terms used in embodiments of this application are merely for the purpose of describing specific embodiments, but are not intended to limit this specification. The terms "a", "said" and "the" of singular forms used in embodiments and the appended claims of this application are also intended to include plural forms, unless otherwise specified in the context clearly.

For a problem that a third-party application cannot be installed on a wearable device such as a smartwatch or a sports band due to software and hardware limitations of the wearable device, and a quantity of applications of the wearable device is relatively small because a capacity of a memory is limited and a large quantity of SDKs cannot be preset in the memory, an embodiment of this application provides a dynamic binding method. Different SDKs are dynamically loaded into the memory and the SDK located in the memory is invoked based on a preset standard application, to implement functions of a plurality of terminal applications without occupying excessive space of the memory.

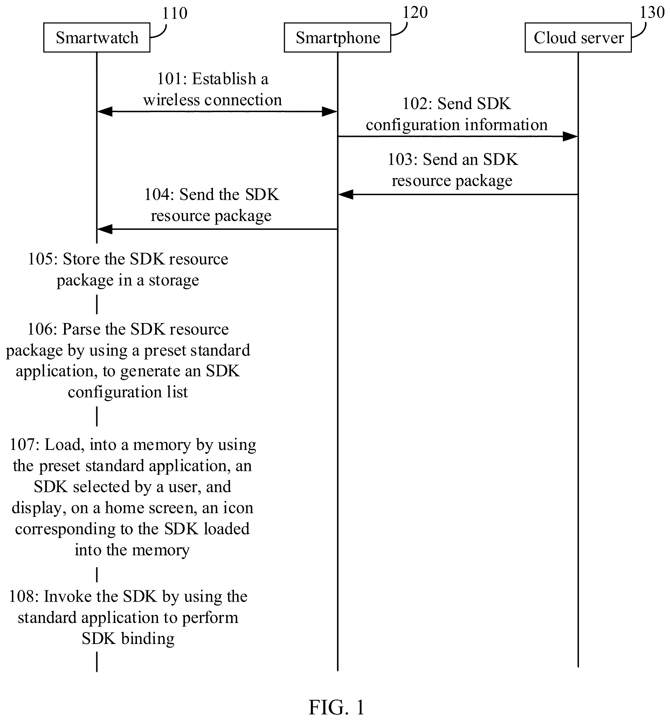

FIG. 1 shows a procedure of a dynamic binding method according to an embodiment of this application. A smartwatch 110 and a smartphone 120 may respectively function as a first terminal device and a second terminal device in this embodiment of this application. The method is applied to a dynamic binding system that includes the smartwatch 110, the smartphone 120, and a cloud server. As shown in FIG. 1, the method may include the following steps.

101. The smartwatch 110 establishes a wireless connection to the smartphone 120.

In this embodiment of this application, the smartwatch 110 may establish a wireless connection to the smartphone 120, such as a Bluetooth connection or a near field communication. The Bluetooth connection is used as an example. The smartphone 120 scans a connectable device in a current environment. After the smartwatch 110 responds, the smartphone 120 sends a connection request to the smartwatch 110, to establish a Bluetooth connection.

In an embodiment, the smartwatch 110 may alternatively establish a connection to the smartphone 120 by using a data line.

102. The smartphone 120 sends SDK configuration information to the cloud server 130.

In this embodiment of this application, a purpose of the smartwatch 110 establishing a wireless connection to the smartphone 120 is to download an SDK resource package from the cloud server 130 by using the smartphone 120. In addition to general SDK resource content, the SDK resource package further has SDK-associated information. A user may determine, based on the information, an SDK function corresponding to the SDK resource package, so that the user selects, from a plurality of SDK resource packages based on the information, a package required by the user. After detecting that establishment of a wireless connection to the smartwatch 110 is completed, the smartphone 120 may send the SDK configuration information to the cloud server 130, to trigger the cloud server 130 to send the corresponding SDK resource package. Specifically, a first pairing and connection between the smartphone 120 and the smartwatch 110 may be used as an action of triggering the smartphone 120 to send the SDK configuration information to the cloud server 130. In addition, if the smartphone 120 is disconnected from the smartwatch 110 before being connected to the smartwatch 110 again, that is, the smartphone 120 is not connected to the smartwatch 110 for the first time, the smartphone 120 may determine whether the current SDK configuration information is updated compared with SDK configuration information used during a previous connection. If the current SDK configuration information is updated, the smartphone 120 is triggered to send the updated SDK configuration information to the cloud server 130; or if the SDK configuration information is not updated, the smartphone 120 does not need to repeatedly send the SDK configuration information to the cloud server 130.

In an embodiment, the SDK configuration information may include device information of the smartwatch 110 and area information of the smartphone 120. After establishing a wireless connection to the smartwatch 110, the smartphone 120 can obtain the device information of the smartwatch 110, and can further obtain the area information of the smartphone 120. There may be a plurality of manners of obtaining the area information of the smartphone 120. For example, the smartphone 120 may obtain a current IP address of the smartphone 120, and determine the area information based on the IP address. The smartphone 120 may further determine the area information based on a pre-configuration of the user. The smartphone 120 may further determine the area information by using a positioning function of the smartphone 120. The smartphone 120 may obtain location information of the smartphone 120, and determine, based on the location information, the information about an area in which the smartphone 120 is located. A representation form of the area information is not limited in this embodiment of this application. For example, a country name may be used to represent the area information. The device information of the smartwatch 110 may be sent to the smartphone 120 when or after the smartphone 120 establishes a wireless connection to the smartwatch 110. The device information may be a device model.

103. The cloud server 130 sends the SDK resource package to the smartphone 120.

In this embodiment of this application, the cloud server 130 pre-stores a plurality of SDK resource packages and an SDK resource package association table, and the SDK resource package association table records SDK resource packages corresponding to different devices in different areas. For example, if the cloud server 130 stores an SDK resource package of a smartwatch in an area A, an SDK resource package of smart glasses in the area A, an SDK resource package of the smartwatch in an area B, and an SDK resource package of the smart glasses in the area B, the device information in the current SDK configuration information is the smartwatch, and the area information is the area B, the cloud server 130 sends, to the smartphone 120 based on the SDK resource package association table and the received SDK configuration information, the SDK resource package required by the smartwatch 110 in the current area B. That is, the cloud server 130 obtains, through screening from a plurality of pre-stored SDK resource package, an SDK resource package associated with the received SDK configuration information, and sends the SDK resource package obtained through screening to the smartphone 120.

104. The smartphone 120 sends the SDK resource package to the smartwatch 110.

In this embodiment of this application, the smartphone 120 can establish a network connection to the cloud server 130 to obtain the SDK resource package, and then send the SDK resource package to the smartwatch 110 through a short-distance wireless communication connection, for example, Bluetooth.

105. The smartwatch 110 stores the SDK resource package in a storage.

After receiving the SDK resource package, the smartwatch 110 first stores the SDK resource package in the storage, for example, a hard disk, and waits for the user to select a configuration.

106. The smartwatch 110 parses the SDK resource package by using a preset standard application, to generate an SDK configuration list.

The standard application is preset in the smartwatch 110, and both the standard application and the SDK resource package that is pre-stored in the cloud server 130 are developed according to a predefined unified standard. Specifically, a developer of each terminal application develops an SDK resource package by using the unified standard, and a manufacturer of a terminal device, for example, the smartwatch 110, presets the standard application inside a device by using the unified standard.

Step 106 may be triggered on different occasions. This is not limited in this embodiment of this application. For example, after the smartwatch 110 stores the SDK resource package in the storage, step 106 is automatically triggered. For another example, after the smartwatch 110 stores the SDK resource package in the storage, if the user performs an operation on the smartwatch 110 to tap an SDK configuration option in a system setting menu, step 106 is triggered.

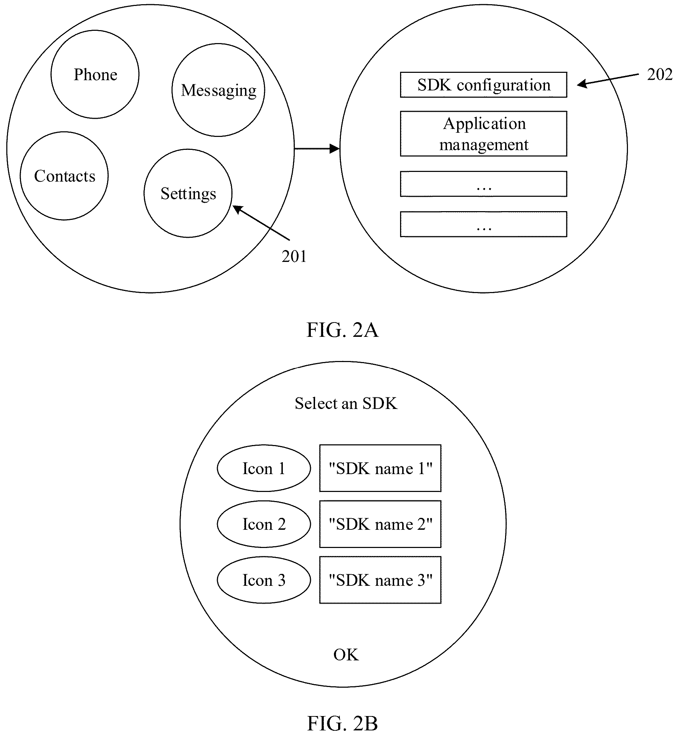

In this embodiment of this application, the user may perform SDK configuration at system management of the smartwatch 110. As shown in FIG. 2A, the user may enter the system management by selecting a setting pointed by an arrow 201. The system management includes options such as SDK configuration and application management. The user may select SDK configuration pointed by an arrow 202 to start an SDK-related configuration procedure. After detecting that the user starts the SDK configuration, the smartwatch 110 parses, by using the preset standard application, all SDK resource packages located in the storage, to obtain an SDK in each SDK resource package and SDK-associated SDK information. The smartwatch 110 may generate an SDK configuration list based on the obtained SDK information, and display the SDK configuration list on an SDK configuration interface for a user to select. As shown in FIG. 2B, the current SDK configuration interface includes the SDK configuration list. The SDK configuration list includes at least one option. For example, FIG. 2B shows three options, and each option has the SDK-associated information. The information may include an icon, an SDK name, and the like, so that the user can distinguish between different SDKs. The current SDK configuration list displays the SDK-associated information of each SDK resource package in the storage, and the user may select one or more SDKs based on a requirement of the user, to perform subsequent SDK configuration.

107. The smartwatch 110 loads, into the memory by using the preset standard application, the SDK selected by the user, and displays, on a home screen, an icon corresponding to the SDK loaded into the memory.

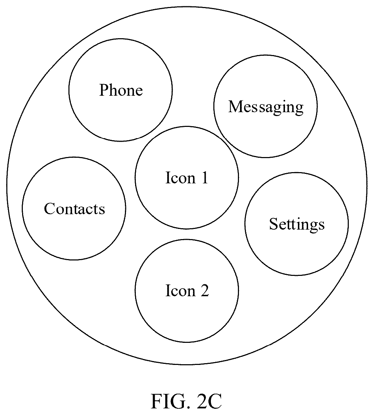

In this embodiment of this application, after detecting that the user selects, on the SDK configuration interface, an option corresponding to the SDK resource package, the smartwatch 110 loads, into the memory by using the preset standard application, an SDK of the SDK resource package corresponding to the selected option. A current user interface jumps from the current SDK configuration interface to the home screen, and the smartwatch 110 adds, to the home screen by using the preset standard application, the icon corresponding to the SDK loaded into the memory. FIG. 2B and FIG. 2C are used as an example. The SDK configuration interface includes three options, that is, there are three SDK resource packages in the storage. The user selects two of the options, that is, selects two SDK resource packages in the storage. The smartwatch 110 loads SDKs of the two corresponding SDK resource packages into the memory by using the preset standard application, and adds, by using the preset standard application, icons 1 and 2 that are respectively corresponding to the two SDKs to the home screen.

108. The smartwatch 110 invokes the SDK by using the standard application to perform SDK binding.

In this embodiment of this application, the user may sequentially select the icons located on the home screen to perform SDK binding. After detecting that any icon on the home screen is selected, the smartwatch 110 invokes, by using the standard application preset on the smartwatch 110, an SDK corresponding to the icon to execute a binding procedure. SDK binding is performed to bind an SDK to a user account number, so that the user can authorize the SDK. The standard application and the SDK resource package are developed according to the unified standard. Therefore, SDKs may be invoked by using the standard application, to implement different application functions. Before normal use, the smartwatch 110 needs to complete SDK binding first, corresponding SDK binding information may be generated by invoking the SDK by using the standard application, and the user may complete the binding procedure by processing the SDK binding information by using the smartphone 120.

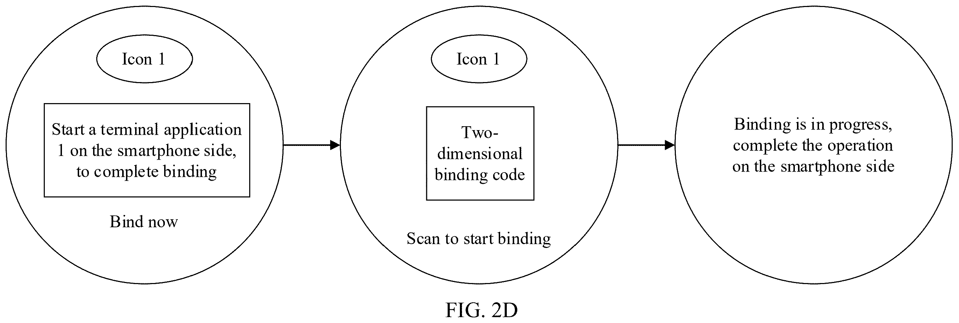

In an embodiment, the SDK binding information is implemented by using a binding interface. The binding interface includes a two-dimensional binding code. When binding is to be performed on any SDK, the user starts a terminal application corresponding to a to-be-bound SDK in the second terminal device to scan the two-dimensional binding code, to implement an SDK binding operation. As shown in FIG. 2D, after the smartwatch 110 detects that the user selects any icon (for example, the icon 1) on the home screen, the user interface jumps to an SDK binding interface, and the interface first prompts the user to start a terminal application 1 on a side of the smartphone 120 to complete binding. The terminal application 1 is a terminal application corresponding to the to-be-bound SDK. After detecting, by using the preset standard application, that "bind immediately" is selected, the smartwatch 110 displays a two-dimensional binding code. The user may scan the two-dimensional binding code by using the terminal application 1 to enter a related interface. In addition, the smartwatch 110 displays, by using the preset standard application, information "Binding is in progress, complete the operation on the smartphone side". The user may perform final binding confirmation on the interface that is entered after the smartphone 120 scans the two-dimensional binding code. It may be understood that, the terminal application 1 in the smartphone 120 is already bound to the user account number, and a binding relationship between the SDK and the user account number may be uploaded to a network side by scanning the two-dimensional binding code by the terminal application 1, to achieve an objective of binding authorization.

In another embodiment, the SDK binding information may be a binding data packet. After generating the binding data packet by using the preset standard application, the smartwatch 110 sends the binding data packet to the smartphone 120. The smartphone 120 starts the terminal application corresponding to the to-be-bound SDK to process the bound data packet, to obtain the information required for SDK binding, to complete the binding operation. An objective of the binding procedure is to bind the SDK in the smartwatch 110 to the user account number, to complete the authorization. In addition to the foregoing two manners, another implementable binding manner may alternatively be used to complete the binding procedure.

In an embodiment, for SDKs loaded into the memory, the user may select corresponding icons in sequence to complete the binding procedure, and the SDKs that are successfully bound are continuously stored in the memory, so that the SDK is invoked by using the standard application to implement a corresponding application function. In addition, an icon corresponding to the SDK that is successfully bound is fixedly displayed on the home screen. If a plurality of SDKs are successfully bound, a plurality of icons are displayed on the home screen.

After the binding is completed, the user may select any icon on the home screen, to execute a normal use procedure by using the preset standard application. After detecting, by using the preset standard application, that the icon is selected, the smartwatch 110 invokes, by using the standard application, the SDK corresponding to the icon in the memory to implement a corresponding function.

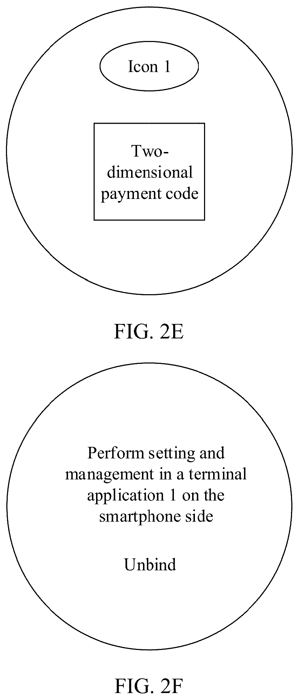

A payment function is used as an example. In an actual scenario, in the SDK configuration interface shown in FIG. 2B, an icon 1 and an SDK name 1 belong to a first option, and correspond to a payment function SDK of a payment service provider 1; an icon 2 and an SDK name 2 belong to a second option, and correspond to a payment function SDK of a payment service provider 2; and an icon 3 and an SDK name 3 belong to a third option, and correspond to a payment function SDK of a payment service provider 3. After the user selects the first option and the second option on the SDK configuration interface, and taps OK, jump to the home screen shown in FIG. 2C, and the icon 1 corresponding to the payment service provider 1 and the icon 2 corresponding to the payment service provider 2 are displayed on the home screen. After the user taps the icon 1 for the first time, a binding interface corresponding to the payment service provider 1 shown in FIG. 2D is displayed. After the user taps Bind now to display a two-dimensional binding code, the user scans the two-dimensional binding code by using a payment APP corresponding to the payment service provider 1 in the smartphone. The smartwatch enters a binding interface, and prompts the user to perform an operation on a mobile phone side. After scanning the two-dimensional binding code, the smartphone enters a binding procedure, and binding may be completed based on a user operation. After the binding is completed, on the home screen shown in FIG. 2C, if the user taps the icon 1 again, because the SDK corresponding to the icon 1 is bound, the smartwatch 110 invokes, by using the standard application, the corresponding SDK 1 in the memory to generate a two-dimensional payment code. As shown in FIG. 2E, because the SDK is successfully bound and authorization is completed, the user can normally complete payment.

In another actual scenario, if the user selects the icon 2, the smartwatch 110 invokes, by using the standard application, the corresponding SDK 2 in the memory to generate another two-dimensional payment code, so that the user completes payment. A specific process is similar to a process corresponding to the icon 1, and details are not described herein again.

In addition, it should be noted that, the two-dimensional binding code and the two-dimensional payment code in this embodiment of this application are merely examples, and types of the binding code and the payment code are not limited. For example, the binding code and the payment code may be bar codes.

Generally, the cloud server 130 delivers all SDK resource packages supported by the smartwatch 110 in a current area. The user selects some SDKs based on a requirement of the user, loads the SDKs to the memory, and completes binding. Therefore, a quantity of SDK resource packages in the storage is greater than a quantity of SDKs in the memory. For the SDK that is bound successfully, the user may alternatively unbind the SDK, and then load, into the memory, another SDK from the SDK resource package in the storage, to complete binding. Space of the memory of the smartwatch 110 is relatively small, and a large quantity of SDKs cannot be preset. In a manner of dynamically binding an SDK by parsing an SDK resource package from the storage, a quantity of functions supported by the smartwatch 110 can be effectively increased.

In an embodiment, the foregoing SDK unbinding procedure may be performed on a side of the smartwatch 110 or on a side of the smartphone 120. Specifically, the user may select an unbinding operation on a running interface generated after the SDK is invoked by using the standard application. In response to an unbinding request, the smartwatch 110 sends an unbinding instruction to the smartphone by using the preset standard application, deletes an unbound SDK from content of the smartwatch by using the preset standard application, and deletes an icon corresponding to the unbound SDK from the home screen by using the preset standard application. After receiving the unbinding instruction, the smartphone triggers a corresponding SDK unbinding procedure.

Alternatively, the user needs to confirm SDK unbinding in a specific terminal application on the side of the smartphone 120. The smartphone 120 may send the SDK unbinding request to the smartwatch 110 based on selection of the user. After receiving the SDK unbinding request, the smartwatch 110 unbinds a specified SDK. For the unbound SDK, the smartwatch 110 deletes the SDK from the memory, and deletes a corresponding icon on the home screen. For example, as shown in FIG. 2F, when the user intends to unbind the SDK 1, the smartwatch 110 prompts the user to perform setting and management in the terminal application 1 on the side of the smartphone 120, to implement unbinding.

In this embodiment of this application, a payment function is used as an example. Different areas may be accustomed to using different payment applications. The cloud server 130 sends a corresponding SDK resource package based on area information, and the smartwatch 110 selects an SDK based on selection of the user and loads the SDK into the memory for dynamic binding. In this way, not only the payment function can be implemented in different areas, but also SDKs of payment applications in the areas do not need to be preset in the memory in advance, thereby saving memory resources. In addition, each payment service provider develops an SDK resource package by using the unified standard, and an SDK loaded into the memory is invoked by using the standard application. A manufacturer of a terminal device, for example, the smartwatch 110, does not need to customize and develop a use interface for each payment service provider, and only needs to develop a use interface of the standard application based on a predefined standard, thereby reducing workloads of customization development and version maintenance.

In an embodiment, after the smartwatch 110 establishes a wireless connection to the smartphone 120, if it is determined that the currently connected smartphone 120 is different from a device that establishes a connection last time, an SDK initialization procedure may be executed, an original SDK in the memory of the smartwatch 110 is deleted, and an original SDK resource package in the storage of the smartwatch 110 is deleted. The foregoing operations can effectively ensure that privacy or property of each user is not infringed.

In an embodiment, if the smartwatch 110 also supports a network function and can establish a network connection to the cloud server 130, the smartwatch 110 may directly send device information of the smartwatch 110 and information about an area in which the smartwatch 110 is located to the cloud server 130. The cloud server 130 directly sends an associated SDK resource package to the smartwatch 110 without using the smartphone 120 as a transit. After receiving the SDK resource package, the smartwatch 110 also stores the SDK resource package in the storage. Subsequent binding, use, and unbinding procedures may be the same as those described above.

In an embodiment, a plurality of standard applications may be preset in the smartwatch 110 for different application types. For example, a corresponding first standard application is preset for a payment application, and a corresponding second standard application is preset for a communication application. When the cloud server 130 delivers an SDK resource package, in addition to the device information and the area information, a corresponding SDK resource package may be further obtained through screening based on an application type. Specifically, when the user intends to perform SDK configuration on the first standard application, the smartwatch 110 may send a corresponding application type to the smartwatch 120. The smartwatch 120 sends the device information, the area information, and the application type to the cloud server 130. The cloud server 130 delivers a payment-related SDK supported by the smartwatch 110 in a current area.

In an embodiment, after the smartphone 120 receives the SDK resource package delivered by the cloud server, the user may send, on the side of the smartphone 120 to the smartwatch 110, the SDK resource package for which an SDK needs to be bound. After receiving the SDK resource package, the smartwatch 110 may load all SDKs into the memory. For example, the cloud server 130 delivers 10 SDK resource packages to the smartphone 120. If the user intends to perform a configuration and binding procedure on only two of the SDK resource packages, the user may select the two SDK resource packages on the side of the smartphone 120 and send the two SDK resource packages to the smartwatch 110, without sending all the 10 SDK resource packages. Specifically, after receiving the SDK resource package sent by the cloud server 130, the smartphone 120 may alternatively store the SDK resource package in the storage of the smartphone 120 and parse the SDK resource package, to obtain SDK information corresponding to each SDK resource package. As shown in the figure, a Bluetooth connection is used as an example. The user may tap a watch configuration option pointed by an arrow 301 to enter a corresponding watch configuration interface, and select, on the watch configuration interface, an SDK management option pointed by an arrow 302, to view the SDK information corresponding to the SDK resource package delivered by the cloud server 130. After selecting the required SDK resource package, the user may tap an application, so that the user can manually select the required SDK resource package from all SDK resource packages delivered by the cloud server 130. The SDK resource package selected by the user may be transmitted to the smartwatch 110 in a Bluetooth manner, for example. Only the currently required SDK resource package is sent to the smartwatch 110, so that power consumption of the smartwatch 110 can be reduced, and a standby time can be prolonged.

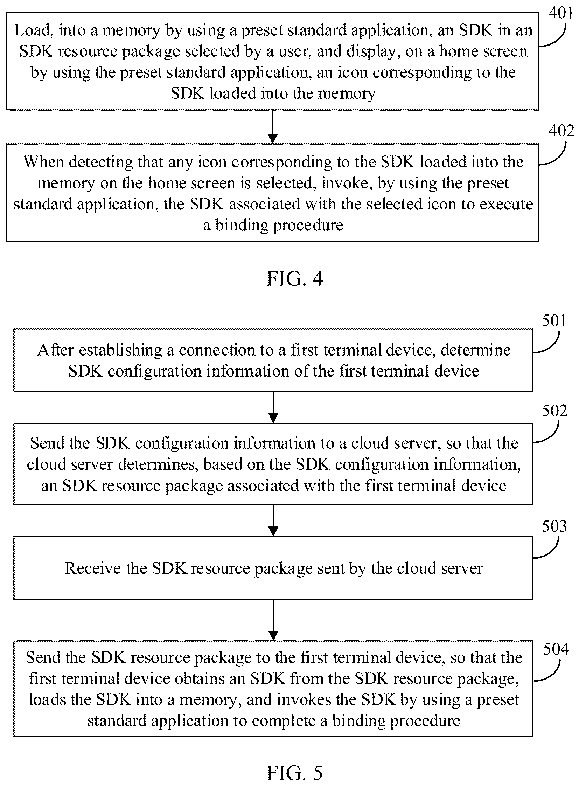

FIG. 4 is a flowchart of another dynamic binding method according to an embodiment of this application. The method may be applied to a first terminal device. The first terminal device includes a lightweight wearable device such as a smartwatch or a sports band, or may include a terminal device, for example, a smartphone. As shown in FIG. 4, the method may include the following steps.

Step 401: Load, into a memory by using a preset standard application, an SDK in an SDK resource package selected by a user, and display, on a home screen by using the preset standard application, an icon corresponding to the SDK loaded into the memory.

Before this step, a software development kit SDK resource package sent by a second terminal device may be received, and the SDK resource package may be stored in a storage. The second terminal device in this embodiment of this application is mainly a device that supports a wireless network function, such as a smartphone. The second terminal device can establish a connection to a cloud server through a network, to exchange data. Due to software and hardware limitations of the first terminal device, the first terminal device may not support a wireless network communication function. Through pairing with and connection to the second terminal device (for example, a Bluetooth connection), the first terminal device may obtain an SDK resource package from the cloud server. Specifically, after establishing a wireless connection to the first terminal device, the second terminal device may obtain the SDK resource package from the cloud server, and send the SDK resource package to the first terminal device.

In an embodiment, if the first terminal device supports the wireless network communication function, the first terminal device may directly establish a network connection to the cloud server and obtain the SDK resource package from the cloud server without forwarding through the second terminal device.

When the user performs SDK configuration through a "Settings" application, in response to an SDK configuration request, the first terminal device parses each SDK resource package stored in the storage by using the preset standard application, to obtain an SDK corresponding to each resource package and SDK-related SDK information. The SDK information is used to distinguish between different SDKs, and may specifically include: an icon, an SDK name, space occupied by the SDK in the memory, and the like. The first terminal device may generate an SDK configuration list based on the obtained SDK information, and display the SDK configuration list on a user interface for the user to select. The user may manually select an SDK configuration in the SDK configuration list. In response to the SDK configuration selection by the user, the first terminal device loads an SDK selected by the user into the memory, and displays a corresponding icon on the home screen.

In an embodiment, when performing the SDK configuration selection, the user may select one or more pieces of SDK configuration information in the SDK configuration list. When detecting that any one or more pieces of configuration information are selected, the first terminal device loads an SDK associated with the selected SDK configuration information into the memory and displays a corresponding icon on the home screen.

Step 402: When detecting that any icon corresponding to the SDK loaded into the memory on the home screen is selected, invoke, by using the preset standard application, the SDK associated with the selected icon to execute a binding procedure.

After the first terminal device loads the SDK selected by the user into the memory, an icon corresponding to each SDK is displayed on the home screen, and the user may start a corresponding SDK binding procedure by selecting an icon corresponding to any SDK. Specifically, a standard application is preset inside the first terminal device, SDK binding information may be generated by invoking, by using the standard application, an SDK whose icon corresponding to the SDK is selected, and the user may process the SDK binding information by using the second terminal device, to complete the related binding procedure.

In an embodiment, terminal applications commonly used in different areas may be different. For a same first terminal device, the cloud server may select, based on different areas in which the first terminal device is located, different SDK resource packages and send the SDK resource packages to the second terminal device. Compared with the memory, the storage of the first terminal device has a larger capacity. However, a quantity of SDK resource packages that can be stored is still limited. The cloud server delivers, based on area information, an SDK resource package commonly used in a current area, so that a quantity of SDKs that can be invoked by the first terminal device can be effectively increased, and an SDK is bound in a targeted manner, to implement a necessary function in the current area. For example, the cloud server stores 20 SDK resource packages. When the first terminal device is in an area A, the first terminal device may download six SDK resource packages from the cloud server, store the six SDK resource packages in the storage, and load two SDKs into the memory, to complete binding. A quantity of SDKs available to the first terminal device is 20. However, actually only two SDKs occupy the memory. When being switched to another area, the first terminal device may update the SDK resource package in the storage.

In this embodiment of this application, after being connected to the second terminal device, the first terminal device obtains the SDK resource package from the cloud server and stores the SDK resource package in the storage. Different SDKs are dynamically loaded into the memory. One standard application can implement functions of a plurality of applications. In addition, a plurality of SDKs do not occupy excessive space of the memory because of being preset in the memory.

FIG. 5 is a flowchart of another dynamic binding method according to an embodiment of this application. The method may be applied to a second terminal device. As shown in FIG. 5, the method may specifically include the following steps.

Step 501: After establishing a wireless connection to a first terminal device, determine SDK configuration information of the first terminal device.

After establishing a wireless connection to the first terminal device, the second terminal device may obtain device information of the first terminal device, and the second terminal device may determine, based on a positioning function of the second terminal device, information about an area in which the second terminal device is located. Because the first terminal device and the second terminal device are located in a same area, the area information may be used to represent an area in which the first terminal device is located.

Step 502: Send the SDK configuration information to a cloud server, so that the cloud server determines, based on the SDK configuration information, an SDK resource package associated with the first terminal device.

Step 503: Receive the SDK resource package sent by the cloud server.

Step 504: Send the SDK resource package to the first terminal device, so that the first terminal device obtains an SDK from the SDK resource package, loads the SDK into a memory, and invokes the SDK by using a preset standard application, to complete a binding procedure.

For other details, refer to the descriptions in the foregoing another flowchart.

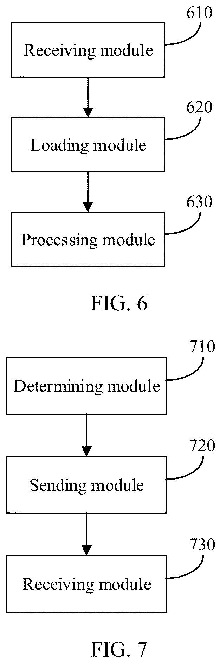

FIG. 6 is a diagram of a structure of a dynamic binding apparatus according to an embodiment of this application. The apparatus is deployed in a first terminal device, to implement the dynamic binding method provided in embodiments of this application. As shown in FIG. 6, the apparatus may include a receiving module 610, a loading module 620, and a processing module 630.

The receiving module 610 is configured to: receive an SDK resource package sent by a second terminal device, and store the SDK resource package in a storage.

The loading module 620 is configured to: load, into a memory by using a preset standard application, an SDK in an SDK resource package selected by a user, and display, on a home screen by using the preset standard application, an icon corresponding to the SDK loaded into the memory.

The processing module 630 is configured to: when detecting that any icon corresponding to the SDK loaded into the memory on the home screen is selected, invoke, by using the preset standard application, the SDK associated with the selected icon to generate SDK binding information. The SDK binding information is used to support the second terminal device in executing a binding procedure.

FIG. 7 is a diagram of a structure of a dynamic binding apparatus according to an embodiment of this application. The apparatus is deployed in a second terminal device to implement the dynamic binding method provided in embodiments of this application. As shown in FIG. 7, the apparatus may include a determining module 710, a sending module 720, and a receiving module 730.

The determining module 710 is configured to: after establishing a wireless connection to a first terminal device, determine SDK configuration information of the first terminal device.

The sending module 720 is configured to send the SDK configuration information to a cloud server, so that the cloud server determines, based on the SDK configuration information, an SDK resource package associated with the first terminal device.

The receiving module 730 is configured to receive the SDK resource package sent by the cloud server.

The sending module 720 is further configured to send the SDK resource package to the first terminal device, so that the first terminal device obtains an SDK from the SDK resource package, loads the SDK into the memory, and invokes the SDK by using a preset standard application, to complete a binding procedure.

For specific execution steps of the foregoing modules, refer to the descriptions of the method flowchart.

An electronic device 800 may function as a specific device to implement the first terminal device, the second terminal device, or the cloud server, and perform the dynamic binding method in embodiments of this application. The electronic device 800 may include a processor 810, an internal storage 821, a power management module 831, a battery 832, and the like.

It may be understood that the structure shown in this embodiment of this application constitutes no specific limitation on the electronic device 800. In some other embodiments of this application, the electronic device 800 may include more or fewer components than those shown in the figure, or some components may be combined, or some components may be split, or a different component layout may be used. The components shown in the figure may be implemented by hardware, software, or a combination of software and hardware.

The processor 810 may include one or more processing units. For example, the processor 810 may include an application processor (application processor, AP), a modem processor, and the like. Different processing units may be independent components, or may be integrated into one or more processors.

The controller may generate an operation control signal based on instruction operation code and a time sequence signal, to control instruction reading and instruction execution.

A storage may be further disposed in the processor 810, and is configured to store instructions and data. In some embodiments, the storage in the processor 810 is a cache. The storage may store instructions or data that is used or cyclically used by the processor 810. If the processor 810 needs to use the instruction or the data again, the processor may directly invoke the instruction or the data from the storage. This avoids repeated access, and reduces a waiting time of the processor 810, thereby increasing system efficiency.

In some embodiments, the processor 810 may include one or more interfaces. The interface may include an inter-integrated circuit (inter-integrated circuit, I2C) interface. The I2C interface is a two-way synchronous serial bus, and includes a serial data line (serial data line, SDA) and a serial clock line (derail clock line, SCL).

It may be understood that an interface connection relationship between the modules that is shown in this embodiment of this application is merely an example for description, and does not constitute a limitation on a structure of the electronic device 800. In some other embodiments of this application, the electronic device 800 may alternatively use an interface connection manner different from that in the foregoing embodiment, or use a combination of a plurality of interface connection manners.

The power management module 831 is configured to connect the battery 832 to the processor 810. The power management module 831 receives input of the battery 832, and supplies power to the processor 810, the internal storage 821, and the like.

The internal storage 821 may be configured to store computer-executable program code. The executable program code includes instructions. The internal storage 821 may include a program storage area and a data storage area. The program storage area may store an operating system, an application program required by at least one function, and the like. The data storage area may store data created during use of the electronic device 800, and the like. In addition, the internal storage 821 may include a high-speed random access memory, and may further include a nonvolatile memory. The processor 810 runs instructions stored in the internal storage 821 and/or instructions stored in the storage disposed in the processor, to execute various function applications and data processing of the electronic device 800.

The processor 810 may run a program stored in the internal storage 821, to perform various function applications and data processing, for example, implement the dynamic binding method provided in embodiments of this application.

An embodiment of this application further provides a non-transitory computer-readable storage medium. The non-transitory computer-readable storage medium stores a computer instruction, and the computer instruction enables the foregoing computer to perform the dynamic binding method provided in embodiments of this application.

Any combination of one or more computer-readable media may be used as the non-temporary computer-readable storage medium. The computer-readable medium may be a computer-readable signal medium or a computer-readable storage medium. The computer-readable storage medium may be, for example but not limited to, electric, magnetic, optical, electromagnetic, infrared, or semiconductor systems, apparatuses, or devices, or any combination thereof. More specific examples (non-exhaustive list) of the computer-readable storage medium include: an electrical connection including one or more wires, a portable computer disk, a hard disk, a random access memory (RAM), a read-only memory (Read Only Memory, ROM for short hereinafter), an erasable programmable read-only memory (Erasable Programmable Read Only Memory, EPROM for short hereinafter) or a flash memory, an optical fiber, a portable compact disc read-only memory (CD-ROM), an optical storage device, a magnetic storage device, or any suitable combination thereof. In this document, the computer-readable storage medium may be any tangible medium that includes or stores a program, and the program may be used by or in combination with an instruction execution system, apparatus, or component.

A computer-readable signal medium may include a data signal propagated in a baseband or propagated as part of a carrier, where the data signal carries computer-readable program code. The propagated data signal may be in various forms, including, but not limited to, an electromagnetic signal, an optical signal, or any suitable combination thereof. The computer-readable signal medium may alternatively be any computer-readable medium other than the computer-readable storage medium. The computer-readable medium may send, propagate, or transmit a program used by or used in combination with the instruction execution system, apparatus, or device.

Program code included in the computer-readable medium may be transmitted by using any suitable medium, including but not limited to wireless, a wire, an optical cable, and RF, or any suitable combination thereof.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of this application. In the specification, the foregoing example expressions of the terms are not necessarily with respect to a same embodiment or example. In addition, the described specific features, structures, materials, or characteristics may be combined in an appropriate manner in any one or more of the embodiments or examples. In addition, a person skilled in the art may integrate or combine different embodiments or examples and characteristics of different embodiments or examples described in the specification, as long as they do not conflict each other.

In addition, the terms "first" and "second" are merely intended for a purpose of description, and shall not be understood as an indication or implication of relative importance or implicit indication of the number of indicated technical features. Therefore, a feature restricted by "first" or "second" may explicitly indicate or implicitly include at least one of such features. In the descriptions of this application, "a plurality of" means at least two, for example, two or three, unless otherwise clearly limited.

Any process or method in the flowcharts or described herein in another manner may be understood as indicating a module, a segment, or a part including code of one or more executable instructions for implementing a particular logical function or process step. In addition, the scope of preferred embodiments of this application includes other implementations that do not follow the order shown or discussed, including performing, according to related functions, the functions basically simultaneously or in a reverse order, which should be understood by technical personnel in the technical field to which embodiments of this application belong.

## Claims

1. A dynamic binding system, wherein the system comprises a first terminal device, a second terminal device, and a cloud server;
the second terminal device is configured to send software development kit SDK configuration information to the cloud server;
the cloud server is configured to: obtain, through screening from a pre-stored SDK resource package, an SDK resource package associated with the SDK configuration information, and send the SDK resource package obtained through screening to the second terminal device;
the second terminal device is further configured to send, to the first terminal device, the SDK resource package sent by the cloud server; and
the first terminal device is configured to: store, in a storage, the SDK resource package sent by the second terminal device, and load, into a memory by using a preset standard application in response to an operation of a user selecting an SDK resource package in the storage, an SDK in the SDK resource package selected by the user, wherein
each SDK resource package and the standard application are developed according to a predefined unified standard, to ensure that the standard application is capable of successfully invoking, for binding and use, the SDK loaded into the memory.

2. The system according to claim 1, wherein
the second terminal device is specifically configured to send the software development kit SDK configuration information to the cloud server when or after the first terminal device establishes a connection to the second terminal device.

3. The system according to claim 2, wherein
the second terminal device is specifically configured to: after the first terminal device establishes the connection to the second terminal device, send the software development kit SDK configuration information to the cloud server if the first terminal device establishes the connection to the second terminal device for the first time or current area information of the second terminal changes compared with area information present when the second terminal device establishes a connection to the first terminal device last time, wherein
the SDK configuration information comprises the area information.

4. The system according to claim 2, wherein
the first terminal device is further configured to send device information to the second terminal device after establishing the connection to the second terminal device, wherein
the SDK configuration information further comprises the device information of the first terminal device.

5. A dynamic binding method, applied to a first terminal device, wherein the method comprises:
loading, into a memory by using a preset standard application, an SDK in an SDK resource package selected by a user, and displaying, on a home screen by using the preset standard application, an icon corresponding to the SDK loaded into the memory; and
when any of the icon on the home screen is selected, invoking, by using the preset standard application, an SDK associated with the selected icon to execute a binding procedure, wherein
each SDK resource package and the standard application are developed according to a predefined unified standard, to ensure that the standard application is capable of successfully invoking, for binding and use, the SDK loaded into the memory.

6. The method according to claim 5, wherein
before the loading, into a memory by using a preset standard application, an SDK in an SDK resource package selected by a user, the method further comprises:
displaying an SDK configuration interface, wherein the SDK configuration interface has an option corresponding to each SDK resource package, and each option has SDK-associated information; and
the loading, into a memory by using a preset standard application, an SDK in an SDK resource package selected by a user comprises:
loading, into the memory by using the preset standard application, an SDK in an SDK resource package corresponding to an option selected by the user on the SDK configuration interface.

7. The method according to claim 6,
before the displaying an SDK configuration interface, further comprising:
receiving a software development kit SDK resource package sent by a second terminal device, and storing the SDK resource package in a storage; and
parsing, by using the preset standard application, each SDK resource package stored in the storage, to obtain an SDK in each SDK resource package and the SDK-associated information.

8. The method according to claim 7, wherein
the loading, into the memory by using the preset standard application, an SDK in an SDK resource package corresponding to an option selected by the user on the SDK configuration interface comprises:
loading, into the memory by using the preset standard application, an SDK in each SDK resource package corresponding to one or more options selected by the user on the SDK configuration interface; and
the displaying, on a home screen by using the preset standard application, an icon corresponding to the SDK loaded into the memory comprises:
displaying, on the home screen by using the preset standard application, an icon corresponding to each SDK loaded into the memory.

9. The method according to claim 7, wherein the information comprises at least one or any combination of:
an icon;
an SDK name; and
storage space occupied by the SDK.

10. The method according to claim 5, wherein after the binding procedure is completed, the method further comprises:
when any of the icon on the home screen is selected, invoking, by using the standard application, an SDK corresponding to the selected icon to execute a use procedure.

11. The method according to claim 5, wherein after the binding procedure is completed, the method further comprises:
receiving an SDK unbinding request sent by a second terminal device; and
unbinding a corresponding SDK based on the SDK unbinding request and deleting the SDK from the memory.

12. The method according to claim 7, wherein before the receiving a software development kit SDK sent by a second terminal device, and storing the SDK in a storage, the method further comprises:
if it is detected that the second terminal device is different from a device connected last time, executing an SDK initialization procedure, wherein the SDK initialization procedure is used to delete an original SDK in the memory and delete an original SDK resource package in the storage.

13. The method according to claim 5, further comprising:
in response to an operation of the user unbinding a bound SDK, sending an unbinding instruction to a second terminal device, deleting the corresponding SDK from the memory, and deleting a corresponding icon from the home screen.

14. A dynamic binding method, wherein the method is applied to a second terminal device and comprises:
determining SDK configuration information after establishing a connection to a first terminal device;
sending the SDK configuration information to a cloud server, so that the cloud server determines, based on the SDK configuration information, an SDK resource package associated with the first terminal device;
receiving the SDK resource package sent by the cloud server; and
sending at least part of the SDK resource package to the first terminal device, so that the first terminal device obtains an SDK from the SDK resource package, loads the SDK into a memory, and invokes the SDK by using a preset standard application, to complete a binding procedure.

15. The method according to claim 14, wherein the SDK configuration information comprises at least device information of the first terminal device and area information; and
the determining SDK configuration information comprises:
obtaining the device information of the first terminal device; and
obtaining a current IP address of the second terminal device, and determining the area information based on the IP address.

16. The method according to claim 14, wherein
the sending at least part of the SDK resource package to the first terminal device comprises:
sending, to the first terminal device, the at least part of the SDK resource package selected by a user from the received SDK resource package sent by the cloud server.

17. The method according to claim 15, wherein the method further comprises:
when it is detected that an unbinding operation is performed on any SDK that is successfully bound, sending an SDK unbinding request to the first terminal device, so that the first terminal device unbinds an SDK bound to the terminal application and deletes the SDK from the memory.

18. An electronic device, comprising:
at least one processor; and
at least one storage communicatively connected to the processor, wherein
the storage stores program instructions, and the processor invokes the program instructions to perform the method according to any one of claims 5 to 17.

19. A computer-readable storage medium, wherein the computer-readable storage medium comprises a stored program, and when the program is executed by a processor, the method according to any one of claims 5 to 17 is implemented.
